# EUROPEAN PATENT SPECIFICATION

(11) **EP 1 436 107 B1**
(45) Date of publication and mention of the grant of the patent: **22.03.2006**
(21) Application number: 02784094.1
(22) Date of filing: 15.10.2002
(51) Int. Cl.: B22F 3/20, B22D 17/00, C22C 1/00

(54) **PRODUCTION OF FEEDSTOCK MATERIALS FOR SEMI-SOLID FORMING**
HERSTELLUNG VON AUSGANGSMATERIAL ZUR VERFORMUNG IN HALBFESTEM ZUSTAND
PRODUCTION DE MATERIAUX DE CHARGES D'ALIMENTATION DESTINES A FORMER DES SEMI-SOLIDES

(30) Priority: 16.10.2001 US 329338 P
(43) Date of publication of application: 14.07.2004
(73) Proprietor: Phillips Plastics Corporation, Prescott, WI 54021 (US)
(72) Inventor: JOHNSON, Kristy, Chippewa Falls, WI 54729 (US); WANG, Nan, Menomonie, WI 54751 (US); KRAMSCHUSTER, Adam, Wisconsin 54724 (US); SCHOUSEK, Brian, Walter, Houiton, WI 54082 (US); POHL, Stephen, Prescott, WI 54021 (US); BJORK, Todd, River Falls WI 54022 (US)
(74) Representative: Heumann, Christian
(86) International application number: PCT/US2002/032721
(87) International publication number: WO 2003/033193

(56) References cited:
- EP-A- 0 080 787
- WO-A-94/06586
- US-A- 5 040 589

## Description

### BACKGROUND

Field of the Invention. The present invention relates to the production of feedstock materials for semi-solid forming, preferably feedstock materials comprising processed, reprocessed or materials to be recycled from semi-solid forming processes.

Metal alloys for semi-solid forming are known in the art. Typically, when magnesium alloys are used for thixomolding, the feedstock is produced by chipping bars comprising magnesium. The chips from these bars are, however, problematic because they are often contaminated with cutting fluid from the chipper and because they often contain metal contaminates from the knives of a chipper. These chips cause additional problems when used as feedstock because the size and shapes of the chips are non-uniform. As a result of the non-uniform size and shape of the chips, (1) voids form in injection molded parts because of non-uniform packing of the chips, (2) bridging may occur at the feed port, and/or (3) non-optimal performance of the injection molding apparatus occurs. Bridging at the feed port occurs because chips are of non-uniform thickness and therefore have non-uniform melting profiles. That is to say, the thinner edges of the chips will melt before the thicker centers. From time to time, plural chips fuse together and become lodged in entry and exit points, thereby blocking the flow of material and interrupting the process. With regard to non-optimal performance of the apparatus, "hiccups" may occur when chips become lodged between an extruder screw and the wall of the extruder. This lodging often creates a whining sound and causes excessive wear to the screw and the barrel wall of the semi-solid forming machine.

Another problem lies with the microstructure of the feedstock materials. Traditional feedstock materials commonly have a dendritic microstructure that is disadvantageous during the thixomolding operation. This problem is common in virgin feedstocks and may be encountered in recycled feedstocks as well.

Another problem is with scraps produced during the thixoforming operation. In a typical operation, scraps, such as sprues and runners are returned to metal foundries, where the scraps are melted to a liquid stage, purified, realloyed, made into billets again (typically with a microstructure containing dendrites not preferred for thixomolding), rechipped and sold back to thixomolder end users. Besides the disadvantages of thixomolding feedstock materials having non-desirable microstructure and the necessity to have to transport scraps back to foundries for reprocessing, the current techniques of recycling provide a disincentive against using proprietary metallurgical compositions.
EP-A-80787 discloses the production by extrusion of a feedstock material of a Mg alloy for semi-solid forming.

As a result, there exists a need for an apparatus and process for making a feedstock material that avoids the problems discussed above.

### SUMMARY

One object of the present invention is to provide a process and apparatus for feedstock production that overcomes the problems and disadvantages of present feedstock materials. An additional object of the invention is to overcome obstacles and cost associated with the recycling of thixotropic revert due to irregular shape and potential for contamination. Another object of the invention is to produce a feedstock of a uniform shape which will feed well in subsequent processing. Yet another object of the invention is to provide a process and apparatus for removing volatile paints and oils from the recycled material used as raw material to provide the feedstock in a flashing step. Yet another object of the invention is to provide a process and apparatus for further alloying elements into spent alloys in the recycling and/or processing stage. Still another object of the invention is to provide an inexpensive means to reduce raw material, including ingots, to a uniform raw material for processing to feedstock without going through the traditional chipping process and with only minimal contamination from a size reduction process. A further object of the invention is to produce a feedstock having a microstructure that is favorable to thixoforming, which may include a globular structure or a crystalline microstructure.

In order to achieve the foregoing and further objects, there has been provided according to one aspect of the invention a process according to claim 18. The process includes providing solid-state raw material, reducing the size of the raw material to produce particles of raw material of a size suitable for further processing, introducing the particles of raw material into an extruder and extruding particles of raw material to form an extrudate feedstock material. It may be desirable to separate the particles of raw material by size, weight, density or other physical characteristics before introducing the particles into the extruder. The extrudate feedstock desirably includes a non-dendritic microstructure such as a globular microstructure.

According to another aspect of the invention, there has been provided an apparatus for producing feedstock materials for semi-solid metal forming according to claim 1. The apparatus includes an extruder, a feeder attached to and in communication with the extruder for introducing raw material into the extruder, and means for maintaining the raw material under an inert atmosphere in the feeder and as the raw material is fed into the extruder. The apparatus further includes a discharge orifice (e.g., die or nozzle) affixed to the extruder and through which the raw material exits the extruder as extrudate. The apparatus also includes a means for controlling the temperature of the extrudate while in the extruder and while the extrudate is being discharged from the extruder. The extrudate reaches a temperature sufficient to transform the raw material to its semi-solid state below its liquefying temperature. The apparatus includes a means for maintaining the extrudate under an inert atmosphere as the raw materials are being extruded into the extrudate, as the extrudate exits the discharge orifice and a pelletizer for dividing extrudate into pellets.

Further objects, features and advantages of the present invention will become apparent from the detailed description of preferred embodiments that follows when considered together with the accompanying drawings. It is to be understood that both the foregoing summary of the invention and the following description of the drawings and detailed description are of a preferred embodiment, and not restrictive of the invention or other alternate embodiments of the invention.

### BRIEF DESCRIPTION OF THE DRAWINGS

The invention is explained below with reference to the exemplary embodiments and with reference to the accompanying drawings, in which:

Figure 1 depicts the process flow of raw material in accordance with an exemplary embodiment of the invention.

Figure 2 depicts an extruder screw design in accordance with an exemplary embodiment of the invention.

Figure 3 is a micrograph depicting a dendritic microstructure.

Figure 4 is a micrograph depicting a globular microstructure.

Figure 5 depicts a pelletizer in the form of a rotary knife apparatus in accordance with an exemplary embodiment of the invention.

Figure 6 depicts a pelletizer in the form of a rotary cutter apparatus in accordance with an exemplary embodiment of the invention.

Figure 7 depicts a pelletizer in the form of a non-mechanical pelletizer in accordance with an exemplary embodiment of the invention.

Figure 8 is a micrograph of a cross-section of feedstock material of magnesium alloy produced in accordance with the present invention at 50X magnification.

Figure 9 is a micrograph of a cross-section of feedstock material of magnesium alloy produced in accordance with the present invention at 100X magnification.

Figure 10 is a micrograph of a cross-section of feedstock material of zinc alloy produced in accordance with the present invention at 140X magnification.

### DETAILED DESCRIPTION

The present invention provides a process to produce feedstock materials for semi-solid forming which have a preferred metallurgy, microstructure, and particle shape. Feedstock materials may comprise magnesium alloys such as AZ91 D, AM50, or AM60, and may also include currently non-thixomoldable magnesium alloys as well as currently non-thixomoldable non-magnesium alloys including, without limitation, zinc, aluminum, tin-lead and gallium based alloys. Raw materials for producing the feedstock material commonly are in a solid-state, and may include ingots, scrap from die casters or scrap, including scrap from thixomolders such as sprues or runners. The raw material may be contaminated with organic paints, coatings, oils, and other non-metal contaminates that typically volatilize at temperatures around 500°C. The raw material may comprise metal having a dendritic and/or a non-dendritic structure. In a preferred embodiment, at least some of the raw material may be recycled from previous thixoforming operations.

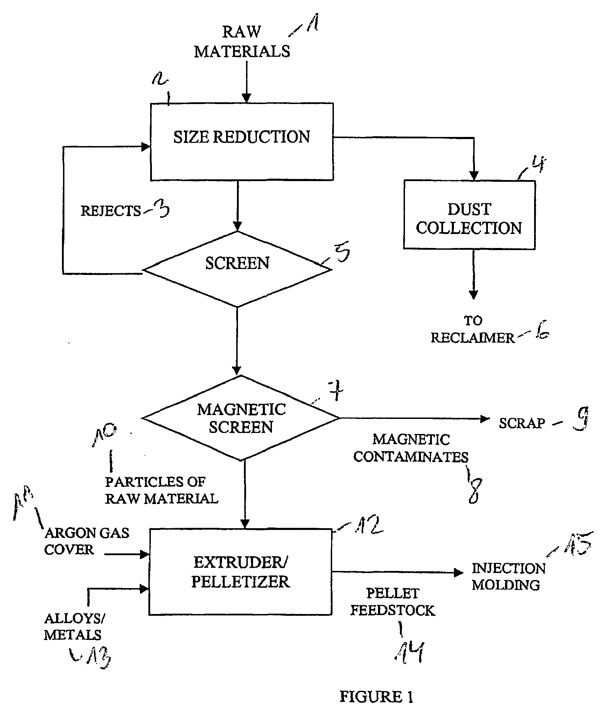

According to one aspect of the invention, a process for producing a feedstock material from raw materials is provided. A preferred process is shown in Figure 1 and includes subjecting the raw material to size reduction, mechanical separation and/or magnetic separation, microstructural and metallurgical refinement in a semi-solid state by extrusion and preferably pellet formation.

According to the preferred embodiment, raw materials in the form of scrap and/or virgin magnesium may be reduced in size by shredding raw materials in, for example, a shear shredding machine to provide particles of raw material. The particles may be of varying size and are generally no larger than the size of the feedthroat of the extruder, which is commonly no more than about 3" in size, and more commonly no greater than about 1" in size, and more desirably no greater than about 3/8" in size. The particles may also comprise more fine particles of about 1/4" or less in size. Generally, the size of the particles is dependant on the equipment used to further process the raw material to feedstock as would apparent to one skilled in the art. A shearing machine may be provided which is capable of reducing raw materials such as scrap, revert and ingots to a uniform, particle size that may be fed into an extruder. In an embodiment that desires to achieve particle size of about 3/8" or less , a shear shredding machine may, for example, have intermeshing rotary knives spaced apart by about 3/8" such that incoming raw material can be reduced to particles of about 3/8" or less in size. According to another embodiment of the present invention, the raw material may be reduced by the size reduction apparatus to particles of about 1/4" in size or less.

Other embodiments may include a different style of size reduction apparatus. For example, two shearing sets may be arranged in series. In this exemplary embodiment, a first set of blades (e.g., rotary knives) may reduce incoming raw material to particles of a first size (e.g., about 1/2" or less in size), and a second set of blades may reduce the particles produced by the first set of blades to particles of a second size (e.g., about 3/8" or less in size). According to yet another embodiment, raw materials may be reduced by a size reduction apparatus that includes two plates (preferably contoured plates) that can be drawn together to crush the raw materials to a desired size. The crushing apparatus may also include a heating system and an inert or protective atmosphere.

Once incoming raw material has been reduced by the shredder or other size reducing apparatus, the particles may be separated based upon physical characteristics of the particles. Common characteristics include size, weight, shape, density, magnetism, or other physical characteristic. Separation may be performed by one or more steps, as desired. For example, the particles may be reduced and separated by a predetermined size, such as about 3/8" or less. Separation may be employed with magnetized screens to remove magnetic contaminants, such as ferrous contaminants and prevent passage of particles greater than about 3/8". The magnetic contaminants may have entered during size reduction or have been a part of the raw materials. If magnetizing screens are used to remove magnetic contaminants, the screens are preferably interchangeable because they can be cleaned frequently and provide for maximum efficiency in removing magnetic contaminants.

In the preferred embodiment as shown in Figure 1, non-magnetic screens may be used in addition to magnetic screens. Regardless of whether a non-magnetic and/or a magnetic screen is employed, the screen also ensures that material of a predetermined size, such as about 3/8", or larger does not move into the next stage of the process. The size of material excluded from further processing by the screen depends, of course, on the mesh size of a given screen and may be varied as desired. The raw materials that do not pass through the screens may be recycled back to the size reduction apparatus and further reduced to proper particle size.

After separation (e.g., through screening or another separation apparatus), raw material being introduced for processing may consist of highly variable shapes and have a wide variety of surface characteristics. These varied raw materials may include pieces that have open cavities, which may be susceptible to oxidation. The tendency of magnesium or other raw material to oxidize at high temperatures can be minimized by maintaining the raw materials in an inert atmosphere. Non-exhaustive examples of gases that can be used to create the intert atmoshphere include the noble gases such as helium, argon and nitrogen, or other gases including SF₆. The inert atmosphere may be provided by introducing a constant flow of inert gas, such as argon, on the raw material as it is introduced to the extruder. To minimize the trapping of air in the cavities, it may be desirable to tumble the raw materials and particles over a distance in an inert atmosphere. The tumbling action may allow the trapped air to be released and provides more comprehensive protection against high temperature oxidation. In one embodiment, a plurality of rotating damper-like obstructions near the feed throat area may be used to provide the tumbling action. As the dampers rotate, the added material is forced to tumble and release any air bubbles contained therein. Another embodiment may require no moving parts, but rather may include a sequence of projections from the feed throat wall that also tumbles the raw material or particles that cause the release of air bubbles from the material.

Microstructural and metallurgical refinement of incoming raw material may be performed, at least partially, in an extruder. Extruders contemplated by the present invention may include, for example, twin-screw extruders, single screw extruders, and stationary screw extruders. Twin-screw extruders may be either co-rotating or counter-rotating extruders with either intermeshing or non-intermeshing screws. In terms of design, twin-screw extruder screws may be either identical or complementary. According to one preferred embodiment, the extruder may be a co-rotating intermeshing twin-screw extruder with identical screws. In the exemplary twin and single screw extruders, a screw may be mounted in a given barrel such that the screw is capable of rotary movement relative to the barrel and is suitable for moving raw material along the barrel and eventually forces the extrudate through discharge orifice. Stationary screw extruders may also be used which includes a screw that does not rotate relative to a barrel. In the stationary screw embodiment, a plunger arranged behind the screw relative to the discharge orifice of the extruder may be employed to force material along the screw and, ultimately through the nozzle of the extruder.

Screws and other components used in suitable extruders may optionally comprise a hardening and/or a non-corrosive coating on their outer surface. Due to the high corrosion potential of processing magnesium alloys in their semi-solid state, it is beneficial if extruder components that contact semi-solid magnesium are resistant to corrosion. According to one preferred embodiment of the invention, extruder components may be manufactured from a cobalt based material such as, for example, STELLITE, a cobalt-chromium alloy, or lined with a corrosion resistant material such as, for example, SIALON, a silicon nitride alloy. Further examples of suitable corrosion resistant materials include INCONEL, a nickel-chromium alloy, and HASTELLOY, a nickel-molybdenum alloy, although other corrosion resistant materials apparent to one skilled in the art may be used.

Extruder screws may be designed in a modular fashion such that several elements line up on a shaft to produce screws of desired length. In a preferred embodiment, such elements may include, for example, high pitch forwarding elements, moderate pitch forwarding elements, low pitch forwarding elements, polygonal elements, distributive combers, kneading blocks, and blister rings. In a preferred embodiment an aspect ratio of a screw may be between about 20:1 and 50:1.

Extruder barrels may also be designed in a modular fashion wherein several segments fit together to make up the full extruder length. Barrel segments are typically manufactured in aspect ratios of 4:1, although other aspect ratios are also suitable depending on the bore diameter. Barrel segments may, optionally, be provided with independent thermal control thereby providing for a plurality of longitudinally spaced heating zones. As used herein, the term "thermal control" includes control of cooling and/or heating capabilities. Cooling capabilities within the barrel may be provided by machined water or oil channels. Heating capabilities may include ceramic band heaters or induction heaters. Ceramic band heaters contemplated by the present invention are typically less expensive and easier to procure than induction heaters. Induction heaters, however, provide the advantage of ensuring that incoming alloy is heated to the core of the extruder. According to one embodiment of the invention, a given barrel may comprise a plurality of heaters. Barrels may be manufactured such that the bulk metallurgy of a given barrel is one that would not react with the raw materials, for example semi-solid magnesium. This may be accomplished by providing a barrel lining. Non-exhaustive examples of barrel linings that may resist corrosion include cobalt based metal or ceramic linings. Should a barrel lining be used, the lining and the barrel desirably are closely fitted to provide more efficient heat transfer to the barrel.

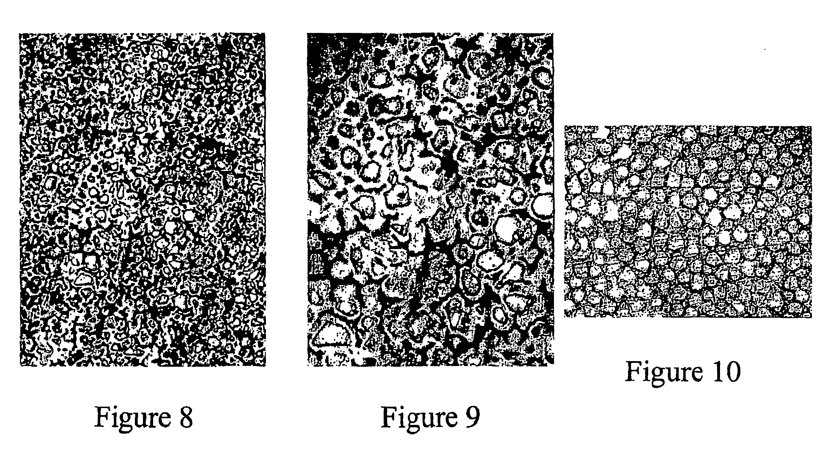

In twin screw extruders, barrel segments are normally bored with two intermeshing channels, resulting in a "figure 8" pattern. Typically, the barrel segments are bored through, with no other ports for materials to exit. In some cases, however, the barrel segment may contain an opening for a vacuum port in order to assist in pulling off volatile components during extrusion. Such an arrangement is typically called a "flash zone".

Other than flash zone areas which may be under vacuum, all stages of the extruder for the incoming raw materials and additional alloying elements as well as the discharge orifice are in an inert atmosphere. The inert atmosphere may be created by the addition of an inert gas such as, for example, argon, to prevent oxidation of the semi-solid alloy. In order to avoid oxidation, the alloy preferably is not exposed to ambient atmosphere until after the alloy cools to a temperature substantially below its solidus temperature. The apparatus for producing the feedstock is provided with means for maintaining the raw material under a cover gas in a feeder and as the raw material is fed into the extruder as particles. In addition, an inert atmosphere is provided with means to maintain the extrudate under an inert gas atmosphere as the extrudate exits the discharge orifice of the extruder. For example, a hood arrangement may be used or, alternatively, a tubular ring comprising holes around its circumference may be used to direct streams of an inert gas onto the extrudate. An inert gas atmosphere may serve to protect the extrudate from oxidation and/or may cool the extrudate. Preferably, the means for maintaining an inert gas atmosphere does not impede the flow of extrudate from the discharge orifice of the extruder.

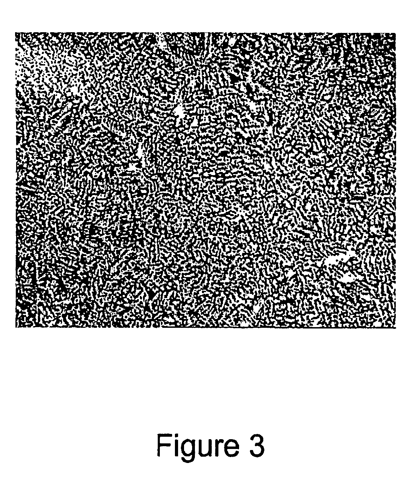

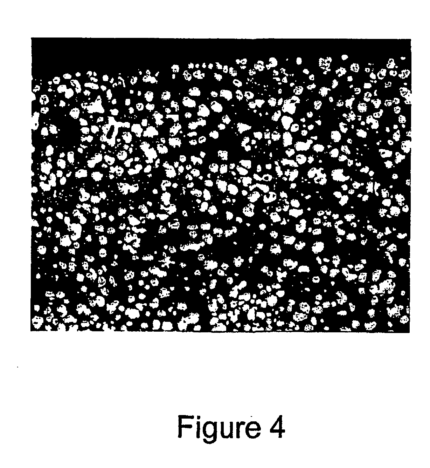

In a preferred embodiment, raw material may be introduced into the extruder at a rate less than or equal to 100% of the capacity of the extruder. The screw segments may be arranged along a shaft in a manner which promotes rapid acceptance of incoming raw material into the extruder near a feed throat and then compression of the raw material as it begins to heat and become more pliable. The incoming raw material may then be exposed to a series of kneading blocks arranged in a forwarding fashion so that dendrites present in the incoming raw material can be sheared and broken. An example of a dendritic microstructure is shown in Figure 3. Preferably, the temperature of the extruder increases continually along this tortuous path to a point not above the liquidus temperature of the raw material. As the alloy continues to travel forward through the extruder and to be mixed via moderate forwarding elements in the channel, it continues to increase in temperature due to frictional heating and/or heat from a ceramic band or induction heater. With sufficient shear and heating, the raw material eventually is transformed to a semi-solid extrudate, resulting in solids having a globular microstructure similar to that shown in Figure 4.

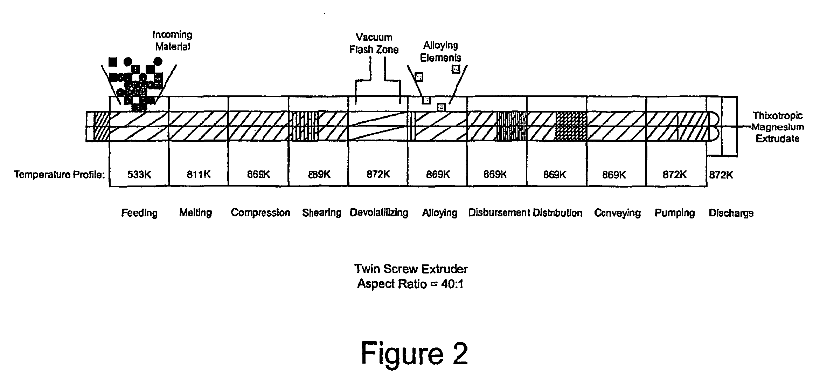

The raw material may then be exposed to polygonal elements or high pitched forwarding elements within the extruder in a vacuum vented barrel segment, e.g. a "flash zone," where paints, oils, and other organic components become volatile and may be removed by a vacuum. This flash zone may be used alone or in conjunction with other flashing of the raw material, for example, before or after reduction of the raw material. A temperature profile along the length of a given extruder may be controlled such that the temperature increase from a feeder to a flash point, decrease after the flash point and then increases again in the direction of the discharge orifice as more clearly shown in Figure 2. According to one preferred embodiment, the temperature profile along the length of a given barrel is maintained such that the temperature at a flash zone represents the maximum temperature in the profile. According to another embodiment, the temperature profile at the discharge orifice of the extruder represents the maximum temperature in the profile.

Additional alloying elements can be added via an additional downstream feed throat. Suitable alloying materials will be apparent to one skilled in the art and may include, without limitation, manganese, zinc, silicon, aluminum, chromium, cobalt, lead, platinum, titanium or a combination thereof. The raw material and any additional alloying elements may be compressed and may pass through a series kneading blocks where the alloying elements are dispersed into the raw material. The resulting, newly formed alloy, then may pass through a series of distributive combers where it is mixed more completely under sufficient shear and temperature to maintain a semi-solid extrudate. After this mixing, the alloy may be forwarded by high pitched forwarding elements, compressed by moderate pitched forwarding elements and fully compacted by low pitched forwarding elements which forward it to the discharge orifice. It is beneficial for the alloy to be compressed immediately before the discharge nozzle so that the extrudate is a continuous strand and/or so that oxygen cannot enter and oxidize the alloy. Preferably, a rate of movement of the material through the extruder is substantially independent of a shearing rate of the material.

During extrusion particles of the raw material may, optionally, be introduced into a given extruder at a rate less than the maximum rate for that extruder. Suitable shear rates include rates of about 5 to 5000 reciprocal seconds, with a rate of about 500 to about 2000 being more preferable, and 1000 to 1500 reciprocal seconds being most preferred. Preferably, a rate of movement of raw material along a barrel of a given extruder is substantially independent of the shearing rate of the raw material. Mean residence times of material in the extruder range from, for example, about 15 to about 200 seconds. In embodiments of the invention comprising two intermeshing screws, an exemplary, non-limiting preferable rate of rotation for the screws is about 25 to 500 rpm, and more preferably about 50 to about 250 rpm, and even more preferably about 125 to about 175 rpm.

Additional alloying elements may be added in order to resolve problems such as, for example, high iron content. In this particular example, manganese may be added as an alloying element because it can isolate iron in the microstructure and renew the corrosion resistance of magnesium if it has been lost due to ferrous contamination. Other alloying elements contemplated by the present invention include manganese, zinc, silicon, aluminum, chromium, cobalt, lead, platinum, and titanium. Desirably, an additional alloying element may be added to the process while the element is at ambient temperature or at a temperature greater than an ambient temperature but less than a solidus temperature of a material in the extruder.

At the discharge orifice the material must be kept sufficiently fluid to flow out of the orifice because there is no longer the capability to shear the alloy. One way to keep the material sufficiently fluid is through temperature control. For example, this may be accomplished by maintaining the temperature of the alloy in the discharge orifice at a temperature within plus or minus 5 degrees Kelvin of the intended discharge orifice temperature. The alloy may then be cooled quickly in the presence of an inert gas such as, for example, argon. Optionally, a gear pump constructed of corrosion resistant components may be fitted to the discharge orifice to assist in pulling the solidifying magnesium from the extruder. A die including as many as ten ports or more through which material can exit may optionally be fitted to the discharge orifice.

In the preferred embodiment, the extrudate exits the discharge orifice and/or die(s) generally in the form of a noodle-like strand or a plurality of noodle-like strands. A noodle-like strand typically comprises a circular cross section, which may have a diameter suitable for final application of the feedstock (e.g., about 1/4" or less for the preferred thixomolding operation). Depending on the final application in which the feedstock material may be employed, other cross sections may also be suitable. An apparatus according to the invention comprises means for controlling the temperature of the extrudate. The temperature may be controlled by, for example heating bands in the orifice, cooling fluid in the orifice, cooling gas emanating from a ring surrounding the orifice and/or the speed at which extrudate is pulled from or pushed out of the orifice. For example, the extrudate, while in noodle form, may be immediately exposed to cool argon gas to begin cooling and lock a preferred microstructure into place.

Preferred microstructures may comprise, for example, a rosette structure, a globular structure and/or an encapsulated alpha phase which may be preferred in a given processing application because it flows more easily as compared to a dendritic structure if employed in the same processing application. A microstructure other than dendritic microstructure may also be preferred because of its physical properties, such as, for example greater tension strength and/or higher elongation as compared to dendritic materials. When the raw materials are exposed to high shear conditions during extrusion and/or just prior to discharge into extrudate from the nozzle, die, or other discharge orifice, the dendritic structures are generally reduced and/or eliminated. The high shear before discharge can also preferably eliminate the formation of dendrites upon cooling the extrudate. Assuming, for the sake of calculation, that materials primarily exhibit laminar flow characteristics and Newtonian flow behavior, suitable shear rates just prior to entering the discharge orifice include, for example, shear rates of about 500 to about 2000 reciprocal seconds. Finite microstructures can be achieved by controlling the take-off and cooling rate from the extruder. The take off and/or cooling rates may be controlled by the speed of extruder screws or a plunger or by take-off via a gear pump. Take-off of the noodle may occur at speeds equal to or greater than the output of the extruder.

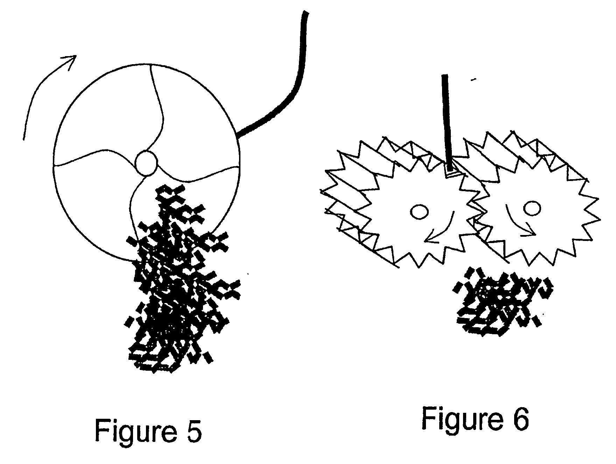

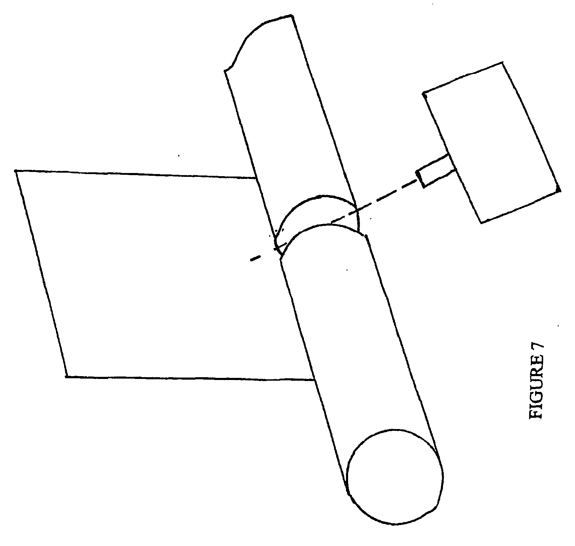

At the take-off point, the extrudate may be divided (most often by cutting) into a desired final size by a pelletizer. Under different embodiments, the extrudate exiting the extruder may be divided shortly after exiting or be transported by a conveyor under an inert gas atmosphere before being divided by the pelletizer. In one preferred embodiment, the pelletizer may be a mechanical cutter where the cutting action may be performed by a knife or blade as shown in Figure 5. According to another embodiment, cutting may be performed by a rotary cutter as shown in Figure 6. In order to minimize the chance of contamination during mechanical cutting of the extrudate, the cutting surface(s) may be made from the same material (e.g., same alloy) as the extrudate. A pelletizer may also be used to divide the extrudate into pellets via a non-mechanical cutter such as, for example, a laser or gas stream as shown in Figure 7. In one embodiment, a high pressure argon stream can be used to cut the extrudate into pellets. Pellets, according to the invention, are preferably of uniform size, having an aspect ratio of between 0.5:1 and 4.:1 and may, optionally, be cylindrical in shape. It should be noted that although rotary knives are suitable, they may potentially be a source of metal contaminants in the final product as the knives wear. Therefore, the use of like metals, a laser, or an inert gas is preferred for cutting.

Once the pellets are cooled to solidus state, they can be used as feedstock material for molding or other forming applications. The feedstock material may be made from most any combination of alloys as needed by a desired application. As discussed, the feedstock desirably includes a microstructure other than the dendritic microstructure which can be controlled by the shear and temperature during the semi-solid extrusion process. For example, magnesium alloy feedstock was prepared with the above identified process using a stationary screw extruder having sufficient shear to provide a globular microstructure as shown in Figures 8 and 9. The extruder maintained the raw material below the liquidus temperature but greater than the solidus temperature in a semi-solid state. In another example, zinc alloy feedstock having a much smaller semi-solid temperature range that magnesium alloys was also prepared with the above-identified process under shearing and temperature conditions suitable for formation of a globular microstructure as shown in Figure 10. Control over the temperature and forward plunger speed of the extruder was closely monitored. In the front barrel regions, a temperature tolerance range of only about 4 degrees Kelvin was allowed. The discharge orifice allowed for approximately a 10 degree Kelvin temperature range. The forward plunger speed was held between about 0.060" per second and about 0.120" per second to impart sufficient shear. The aforementioned examples are presented to illustrate the present invention and to assist one of ordinary skill in making and using the same. The examples are not intended in any way to otherwise limit the scope of the invention.

Turning now to the drawings, Figure 1 depicts a flow diagram for one process for producing pelletized feedstock according to the present invention which has been described above.

Figure 2 depicts a configuration for an extruder according to one embodiment of the present invention. The extruder has an aspect ratio of 40:1 and comprises a plurality of segments. A first feeding segment includes a feeding throat that is maintained at a temperature of about 533°K. As the incoming raw material moves along the extruder, it subsequently passes into a melting segment which is maintained at about 811°K, a shearing segment which is maintained at about 869°K, a devolatilizing vacuum flash segment which is maintained at about 872°K, an alloying segment where alloying elements may be added which is maintained at about 869°K, a disbursement segment which is maintained at about 869°K, a distribution segment which is maintained at about 869°K, a conveying segment which is maintained at about 869°K, a pumping segment which is maintained at about 869°K and a discharge segment which is maintained at about 872°K from which thixotropic extrudate may exit the extruder.

Figure 3 shows a micrograph of a dendritic microstructure formed by solidification of an extrudate not sufficiently exposed to sufficient shear forces.

Figure 4 shows a micrograph of globular microstructure resulting from solidification of an extrudate exposed to sufficient shear forces.

Figure 5 depicts an exemplary rotary knife cutter according to one aspect of the invention. In such a cutter, an extrudate strand or a plurality of extrudate strands intersect the blades from an axial direction. A rotary knife pelletizer would be best positioned at the discharge orifice or die of an extruder, although other positions, such as at the end of a conveyor, are also contemplated by the present invention.

Figure 6 depicts a rotary cutter pelletizer according to another embodiment of the present invention. When using a rotary cutter, an extrudate strand or a plurality of extrudate strands come into contact with the blades from a direction roughly perpendicular to an axis of rotation of the cutters. Rotary cutter extruders may preferably be used at a point downstream from the extruder, such as at the end of a conveyor, although rotary cutters may also be positioned at the discharge orifice of an extruder.

Figure 7 depicts non-mechanical pelletizers that may be used to divide the extrudate of the present invention. The non-mechanical pelletizer may be in the form of a laser or fluid stream (e.g., gas or liquid stream).

Figures 8, 9 and 10 are micrographs of various alloys that have been solidified after being exposed to sufficient shear and temperature to provide a globular microstructure.

The foregoing embodiments have been shown for illustrative purposes only and are not intended to limit the scope of the invention which is defined by the claims.

## Claims

1. An apparatus for producing feedstock materials for semi-solid metal forming, comprising;
an extruder;
a feeder attached to and in communication with said extruder for introducing raw material into said extruder;
means for maintaining said raw material under an inert atmosphere in said feeder and as said raw material is fed into said extruder;
a discharge orifice affixed to said extruder and through which said raw material exits said extruder as extrudate having a temperature below the liquidus temperature of the raw material and greater than the solidus temperature;
means for controlling a temperature of the raw materials within the extruder and said extrudate at less than liquidus temperature;
means for maintaining said extrudate under an inert atmosphere as said extrudate exits said discharge orifice; and
a pelletizer for dividing extrudate.

2. An apparatus according to claim 1, wherein said extruder comprises a barrel having a plurality of longitudinally spaced heating zones and a flash zone.

3. An apparatus according to claim 1, wherein said extruder comprises at least one heater.

4. An apparatus according to claim 3, wherein said heater includes a ceramic band heater or an induction heater.

5. An apparatus according to claim 1, wherein said extruder comprises a single, stationary screw mounted in said barrel.

6. An apparatus according to claim 5, wherein said extruder further comprises a plunger for forcing raw material through said extruder along said stationary screw.

7. An apparatus according to claim 1, wherein said extruder comprises at least one screw that is capable of rotary movement relative to said barrel and is suitable for moving said raw material along said barrel from in the direction of the feeder to the discharge orifice.

8. An apparatus according to claim 1, wherein the extruder includes a barrel that includes a non-corrosive lining.

9. An apparatus according to claim 1, wherein the extruder includes at least one screw having a hardening material on an outer surface of said screw.

10. An apparatus according to claim 1, further comprising a gear pump fitted to the discharge orifice nozzle of said extruder for aiding in the removal of extrudate from said extruder.

11. An apparatus according to claim 1, further comprising means for carrying extrudate exciting the discharge orifice of said extruder away from said extruder, optionally under an inert atmosphere.

12. An apparatus according to claim 1, further comprising means for maintaining all stages of said extruder, other than a vacuum stage, if present, under an inert gas atmosphere.

13. An apparatus according to claim 1, wherein said pelletier comprises a mechanical cutter with blades constructed from a compatible alloy.

14. An apparatus according to claim 1, wherein said pelletier comprises a non-mechanical cutter.

15. An apparatus according to claim 1, wherein said extruder comprises a screw having a modular design such that a plurality of elements may be arranged along a shaft to produce a screw of a predetermined length.

16. An apparatus according to claim 15, wherein said elements comprise at least one of a high pitch forwarding element, a moderate pitch forwarding element, a low pitch forwarding element, a polygonal element, a distributive comber, a kneading block, or a blister ring.

17. An apparatus according to claim 1, further comprising a size reduction apparatus for reducing a size of said raw material.

18. A process for producing feedstock materials for semi-solid forming by using an apparatus according to claim 1, comprising:
providing solid-state raw material;
reducing a size of said raw material to produce particles of raw material of a size suitable for further processing;
introducing said particles of raw material into an extruder; and
extruding said particles of raw material to form an extrudate feedstock material, wherein the extrudate is in semi-solid state.

19. A process for producing feedstock materials according to claim 18, further comprising removing magnetic contaminants from said particles of raw material.

20. A process for producing feedstock materials according to claim 18, further comprising, during said extruding, adding elemental metal or an alloy to said raw material to affect the metallurgical properties of at least one of said raw material and said extrudate.

21. A process for producing feedstock materials according to claim 18, wherein the raw material is extruded at a rate of movement along a barrel of said extruder that is substantially independent of a shearing rate of said raw material.

22. A process for producing feedstock materials according to claim 18, further comprising cooling said extrudate under an inert atmosphere.

23. A process for producing feedstock material according to claim 18, wherein said extruding further comprises exposing incoming raw material to a series of kneading blocks arranged in a forwarding fashion so as to provide sufficient shear to remove at least a portion of the dendritic structures present in said incoming raw material.

## Patentansprüche

1. Vorrichtung zur Herstellung von Ausgangsmaterial für das Umformen von teilfestem-teilflüssigem Metall, **gekennzeichnet durch**
- einen Extruder;
- eine Zuführeinrichtung, welche an dem Extruder befestigt und **durch** welche dem Extruder Rohmaterial zuführbar ist;
- Mittel, um das Rohmaterial in der Zuführeinrichtung und während der Zuführung zum Extruder unter einer Inertgasatmosphäre zu halten;
- eine Austrittsöffnung, welche am Extruder befestigt ist und **durch** welche das Rohmaterial aus dem Extruder als Extrudat austritt, wobei das Extrudat eine Temperatur unterhalb der Liquidustemperatur des Rohmaterials, jedoch oberhalb der Solidustemperatur aufweist;
- Mittel zur Regelung einer Temperatur des Rohmaterials innerhalb des Extruders und des Extrudats auf einer Temperatur unterhalb der Liquidustemperatur;
- Mittel zum Halten des Extrudats unter einer Inertgasatmosphäre, während das Extrudat aus der Austrittsöffnung austritt; und
- eine Granuliereinrichtung zur Zerteilung des Extrudats.

2. Vorrichtung nach Anspruch 1, **dadurch gekennzeichnet, dass** der Extruder einen Zylinder aufweist, welcher eine Vielzahl von in Längsrichtung beabstandeten Heizzonen und eine Gasabzugszone aufweist.

3. Vorrichtung nach Anspruch 1, **dadurch gekennzeichnet, dass** der Extruder mindestens eine Heizeinrichtung aufweist.

4. Vorrichtung nach Anspruch 3, **dadurch gekennzeichnet, dass** die Heizeinrichtung als keramische Ringheizung oder Induktionsheizung ausgebildet ist.

5. Vorrichtung nach Anspruch 1, **dadurch gekennzeichnet, dass** der Extruder eine einzelne, stationäre Schnecke aufweist, welche in dem Zylinder angeordnet ist.

6. Vorrichtung nach Anspruch 5, **dadurch gekennzeichnet, dass** der Exruder einen Kolben zur Pressung des Rohmaterials durch den Extruder entlang der stationären Schnecke aufweist.

7. Vorrichtung nach Anspruch 1, **dadurch gekennzeichnet, dass** der Extruder mindestens eine Schnecke aufweist, welche drehbar in Bezug auf den Zylinder und durch welche das Rohmaterial entlang des Zylinders in einer Richtung von der Zuführeinrichtung bis zur Austrittsöffnung förderbar ist.

8. Vorrichtung nach Anspruch 1, **dadurch gekennzeichnet, dass** der Extruder einen Zylinder aufweist, welcher mit einer korrosionsbeständigen Auskleidung versehen ist.

9. Vorrichtung nach Anspruch 1, **dadurch gekennzeichnet, dass** der Extruder mindestens eine Schnecke aufweist, welche auf ihrer äußeren Oberfläche ein härtbares Material aufweist.

10. Vorrichtung nach Anspruch 1, **dadurch gekennzeichnet, dass** an der Austrittsöffnung des Extruders eine Zahnradpumpe angeordnet ist, durch welche die Entfernung des Extrudats unterstützt wird.

11. Vorrichtung nach Anspruch 1, **dadurch gekennzeichnet, dass** Mittel zum Abtransport von aus der Austrittsöffnung austretendem Extrudat, vorzugsweise unter einer Inertgasatmosphäre vorgesehen sind.

12. Vorrichtung nach Anspruch 1, **dadurch gekennzeichnet, dass** Mittel zur Aufrechterhaltung einer Inertgasatmosphäre für alle Stufen des Extruders - ausgenommen eine unter Unterdruck stehende Stufe, sofern vorhanden - vorgesehen sind.

13. Vorrichtung nach Anspruch 1, **dadurch gekennzeichnet, dass** die Granuliereinrichtung mechanische Schneidwerkzeuge mit Klingen, herstellbar aus einer kompatiblen Legierung, aufweist.

14. Vorrichtung nach Anspruch 1, **dadurch gekennzeichnet, dass** die Granuliereinrichtung eine nicht mechanische Schneideinrichtung aufweist.

15. Vorrichtung nach Anspruch 1, **dadurch gekennzeichnet, dass** der Extruder eine Schnecke mit einem modularen Aufbau aufweist, wobei eine Vielzahl von Elementen entlang einer Welle zur Herstellung einer Schnecke vorbestimmter Länge positionierbar sind.

16. Vorrichtung nach Anspruch 15, **dadurch gekennzeichnet, dass** die einzelnen Elemente mindestens ein Förderelement mit hoher Steigung, ein Förderelement mit mittlerer Steigung, ein Förderelement mit geringer Steigung, ein Polygonelement, ein Verteilerelement, einen Knetblock oder einen Blasenring aufweisen.

17. Vorrichtung nach Anspruch 1, **dadurch gekennzeichnet, dass** zusätzlich eine Vorrichtung zur Reduzierung der Größe des Rohmaterials (Größenreduziervorrichtung) vorgesehen ist.

18. Verfahren zur Herstellung von Ausgangsmaterial für das Umformen von teilfestem-teilflüssigem Metall, durchführbar mit einer Vorrichtung gemäß Anspruch 1, **gekennzeichnet durch** folgende Verfahrensschritte:
- Bereitstellung von Rohmaterial in festem Zustand;
- Reduzieren der Größe des Rohmaterials zur Herstellung von Partikeln aus Rohmaterial mit einer für das weitere Verfahren geeigneten Größe;
- Einführen der Partikel aus Rohmaterial in den Extruder und
- Extrudieren der Partikel aus Rohmaterial zur Erzeugung eines extrudierten Ausgangsmaterials, welches einen teilfesten-teilflüssigen Zustand aufweist.

19. Verfahren nach Anspruch 18, **dadurch gekennzeichnet, dass** magnetische Fremdsubstanzen aus den Rohmaterialpartikein entfernt werden.

20. Verfahren nach Anspruch 18, **dadurch gekennzeichnet, dass** während des Extrudiervorganges elementares Metall oder eine Legierung dem Rohmaterial zur Beeinflussung der metallurgischen Eigenschaften des Rohmaterials und/oder des Extrudats zugesetzt werden.

21. Verfahren nach Anspruch 18, **dadurch gekennzeichnet, dass** das Rohmaterial mit einer Vorschubrate entlang des Zylinders extrudiert wird, welche im Wesentlichen unabhängig von der Scherrate des Rohmaterials ist.

22. Verfahren nach Anspruch 18, **dadurch gekennzeichnet, dass** das Extrudat unter einer Inertgasatmosphäre gekühlt wird.

23. Verfahren nach Anspruch 18, **dadurch gekennzeichnet, dass** das zugeführte Rohmaterial während des Extrudiervorganges mit einer Reihe von Knetblöcken in Kontakt gebracht wird, welche in einer die Förderwirkung unterstützenden Weise und zur Erzielung einer hinreichenden Scherwirkung angeordnet sind, sodass wenigstens ein Teil der in dem zugeführten Material enthaltenen dendritischen Strukturen beseitigt wird.

## Revendications

1. Appareillage pour la production de matériaux de charge d'alimentation destinés à former des semi-solides, comprenant:
une extrudeuse;
un moyen d'alimentation fixé à et en communication avec ladite extrudeuse pour l'introduction de matériau brut dans ladite extrudeuse;
des moyens pour maintenir ledit matériau brut sous une atmosphère inerte dans ladite alimentation et lorsque ledit matériau brut est introduit dans ladite extrudeuse;
un orifice de décharge apposé sur ladite extrudeuse et par lequel ledit matériau brut sort de ladite extrudeuse sous forme d'un extrudat ayant une température inférieure à la température de liquéfaction du matériau brut et supérieure à la température de solidification;
des moyens de contrôle de la température des matériaux bruts à l'intérieur de l'extrudeuse et dudit extrudat en dessous de la température de liquéfaction;
des moyens pour maintenir ledit extrudat sous une atmosphère inerte lorsque ledit extrudat sort dudit orifice de décharge, et
un granulateur pour diviser l'extrudat.

2. Appareillage suivant la revendication 1, dans lequel ladite extrudeuse comprend un cylindre comportant une pluralité de zones de chauffage espacées longitudinalement et une zone d'évaporation rapide.

3. Appareillage suivant la revendication 1, dans lequel ladite extrudeuse comprend au moins un dispositif de chauffage.

4. Appareillage suivant la revendication 3, dans lequel ledit dispositif de chauffage comprend un dispositif de chauffage à ruban de céramique ou un dispositif de chauffage à induction.

5. Appareillage suivant la revendication 1, dans lequel ladite extrudeuse comprend une vis fixe unique montée dans ledit cylindre.

6. Appareillage suivant la revendication 5, dans lequel ladite extrudeuse comprend en outre un piston pour pousser le matériau brut dans ladite extrudeuse le long de ladite vis fixe.

7. Appareillage suivant la revendication 1, dans lequel ladite extrudeuse comprend au moins une vis capable d'un mouvement rotatif par rapport audit cylindre et convient pour faire avancer ledit matériau brut le long dudit cylindre de la direction allant de l'alimentation vers l'orifice de décharge.

8. Appareillage suivant la revendication 1, dans lequel l'extrudeuse comprend un cylindre qui comprend un revêtement non corrosif.

9. Appareillage suivant la revendication 1, dans lequel l'extrudeuse comprend au moins une vis comportant un matériau de durcissement sur une surface externe de ladite vis.

10. Appareillage suivant la revendication 1, comprenant en outre une pompe à engrenages montée sur la tuyère de l'orifice de décharge de ladite extrudeuse afin d'aider le retrait de l'extrudat de ladite extrudeuse.

11. Appareillage suivant la revendication 1, comprenant en outre des moyens pour transporter l'extrudat sortant de l'orifice de décharge de ladite extrudeuse hors de ladite extrudeuse, éventuellement sous une atmosphère inerte.

12. Appareillage suivant la revendication 1, comprenant en outre des moyens pour maintenir tous les étages de ladite extrudeuse, autres qu'un étage sous vide, si il est présent, sous une atmosphère de gaz inerte.

13. Appareillage suivant la revendication 1, dans lequel ledit granulateur comprend une découpeuse mécanique pourvue de lames construites dans un alliage compatible.

14. Appareillage suivant la revendication 1, dans lequel ledit granulateur comprend une découpeuse non mécanique.

15. Appareillage suivant la revendication 1, dans lequel ladite extrudeuse comprend une vis ayant une conception modulaire telle qu'une pluralité d'éléments puissent être disposés le long d'un arbre pour produire une vis de longueur prédéterminée.

16. Appareillage suivant la revendication 15, dans lequel lesdits éléments comprennent au moins l'un d'un élément d'acheminement à grand pas, d'un élément d'acheminement à pas modéré, d'un élément d'acheminement à petit pas, d'un élément polygonal, d'un peigne de distribution, d'un bloc de corroyage ou d'un anneau de cémentation.

17. Appareillage suivant la revendication 1, comprenant en outre un appareillage de réduction de taille pour réduire la taille dudit matériau brut.

18. Procédé de production de matériaux de charge d'alimentation destinés à former des semi-solides en utilisant un appareillage suivant la revendication 1, comprenant :
la fourniture d'un matériau brut à l'état solide;
la réduction de taille dudit matériau brut pour produire des particules de matériau brut d'une taille adéquate pour le traitement ultérieur;
l'introduction desdites particules de matériau brut dans une extrudeuse; et
l'extrusion desdites particules de matériau brut pour former un matériau de charge d'alimentation extrudé, l'extrudat se trouvant à l'état semi-solide.

19. Procédé de production de matériaux de charge d'alimentation selon la revendication 18, comprenant en outre l'élimination des contaminants magnétiques desdites particules de matériau brut.

20. Procédé de production de matériaux de charge d'alimentation selon la revendication 18, comprenant en outre, pendant ladite extrusion, l'ajout de métal élémentaire ou d'un alliage audit matériau brut pour modifier les propriétés métallurgiques d'au moins l'un parmi ledit matériau brut et ledit extrudat.

21. Procédé de production de matériaux de charge d'alimentation selon la revendication 18, dans lequel le matériau brut est extrudé à une vitesse de mouvement le long d'un cylindre de ladite extrudeuse qui est essentiellement indépendante du taux de cisaillement dudit matériau brut.

22. Procédé de production de matériaux de charge d'alimentation selon la revendication 18, comprenant en outre le refroidissement dudit extrudat sous une atmosphère inerte.

23. Procédé de production de matériaux de charge d'alimentation selon la revendication 18, dans lequel ladite extrusion comprend en outre l'exposition du matériau brut entrant à une série de blocs de corroyage disposés selon un mode d'acheminement de manière à fournir un cisaillement suffisant pour éliminer au moins une partie des structures dendritiques présentes dans ledit matériau brut entrant.
